# EUROPÄISCHE PATENTSCHRIFT

(11) **EP 2 738 840 B1**
(45) Veröffentlichungstag und Bekanntmachung des Hinweises auf die Patenterteilung: **14.01.2015**
(21) Anmeldenummer: 12008051.0
(22) Anmeldetag: 30.11.2012
(51) Int. Cl.: H01M 4/24, H01M 8/10, H01M 4/86, H01M 4/90, H01M 4/92, H01M 12/06

(54) **Bipolare Zelle für eine wiederaufladbare Batterie und Batterieelement**
Bipolar cell for a rechargeable battery and battery element
Cellule bipolaire pour une batterie rechargeable et élément de batterie

(43) Veröffentlichungstag der Anmeldung: 04.06.2014
(73) Patentinhaber: Pauling, Hans-Jürgen, 75038 Oberderdingen (DE)
(72) Erfinder: Pauling, Hans-Jürgen, 75038 Oberderdingen (DE)
(74) Vertreter: Schiffer, Axel Martin

(56) Entgegenhaltungen:
- US-A1- 2004 053 104
- US-A1- 2007 141 431
- US-A1- 2007 190 379
- US-A1- 2007 238 010

## Beschreibung

Die Erfindung betrifft eine bipolare Zelle für eine wiederaufladbare Batterie und ein Batterieelement.

Unter dem Begriff Zelle wird im breiteren Sinn in dieser Anmeldung auch eine Elektrode oder ein Elektrodenpaar verstanden.

Herkömmliche Zink-Luft-Batterien zeichnen sich durch niedrige Produktionskosten und hohe Energiedichten, aber auch geringe Leistungsdichten aus. Die niedrigen Leistungsdichten werden durch zwei Faktoren verursacht. Einerseits haben die Elektroden in der Batterie eine geringe Packungsdichte, andererseits ist die Leistungsabgabe durch die Diffusion des aktiven Gases, wie zum Beispiel Sauerstoff, durch die relativ dicke Gasdiffusionselektrode limitiert.

Herkömmliche Zink-Luft-Batterien weisen im Allgemeinen einen Aufbau aus einem flachen Gehäuse auf, wobei auf beiden Seiten des Gehäuses jeweils eine Luftelektrode angeordnet ist. Das Gehäuse ist mit einem Elektrolyten gefüllt, wobei in der Mitte der Zelle zwischen den Luftelektroden eine Zinkanode angeordnet ist.

Diese Struktur ist erzwungen, da das gasförmige Oxidationsmittel, insbesondere Luft oder Sauerstoff, von außen an die Zelle herangeführt werden muss. Eine Stapelung mit einer direkten alternierenden Abfolge von Anode und Kathode, wie sie in den anderen Arten von Batterien mit einer hohen Leistung verwendet wird, wie beispielsweise Bleiakkumulatoren, Nickel-Metallhydrid-Batterien, Lithiumakkumulatoren, ist derzeit bei Zink-Luft-Batterien nicht möglich. Durch die notwendige Doppelfolge der Zink-Luft-Stapelung von Anode/Kathode/Luftspalte/Kathode/Anode ergibt sich eine geringere Packungsdichte von aktiven Elektroden in der Batterie. Dies ist dadurch bedingt, dass der dazwischen liegende Luftspalt relativ breit sein muss, um den notwendigen Luftzutritt zu den beiden Elektroden zu ermöglichen.

Die Luftelektrode bildet aus den genannten Gründen einen Teil des Gehäuses und muss daher eine relativ hohe mechanische Stabilität aufweisen. In der praktischen Anwendung werden daher in diese Elektrode häufig zwei stabile, dicke Metallgitter eingearbeitet. Dadurch weisen die Elektroden eine Dicke von etwa 0,5 mm bis 2 mm auf. Bei derart dicken Elektroden ist die Gasdiffusion jedoch relativ langsam und die resultierende elektrische Stromdichte gering.

Üblicherweise wird der in der Luftelektrode generierte Strom über ein integriertes Ableitgitter an einen Stromkollektorstreifen am Rand der Elektrode abgegeben. Um eine hohe Gasdiffusion zu ermöglichen und daher die Elektrode so dünn wie möglich ausgeführt werden sein sollte, ist auch das integrierte Ableitgitter relativ dünn und weist häufig eine Dicke von unter 0,3 mm auf. Eine derart geringe Dicke bedingt allerdings bei einem Leiter einen vergleichsweise hohen Widerstand.

Dies bedingt zum einen, dass die Zelle einen hohen Innenwiderstand aufweist und leistungsschwach ist. Zum anderen ist das elektrische Potenzial nicht an jeder Stelle der Luftkathode gleich, sondern es treten signifikante Unterschied auf, welche zu unterschiedlichen Reaktionsgeschwindigkeiten über die Fläche der Kathode und somit auch über die der Anode führen. Die unterschiedlichen Belastungen der Elektrodenoberflächen verändert die Zelle partiell und verringert deren Lebensdauer.

Bei anderen Batteriesystemen kann die Leistungsdichte dadurch erhöht werden, dass ein Anoden-Kathoden-Paar als bipolare Elektrode verwendet wird. Da jedoch bislang das elektronenaufnehmende Medium Luft oder Sauerstoff von außerhalb an die Kathodenoberfläche transportiert werden musste, war diese Lösung bislang in einer klassischen bipolaren Anordnung nicht realisierbar.

Als eine **Aufgabe** der Erfindung kann angesehen werden, eine bipolare Zelle für eine wiederaufladbare Batterie bereitzustellen, welche hohe Stromdichten erreicht und eine lange Lebensdauer aufweist. Eine weitere Aufgabe der Erfindung kann darin gesehen werden, ein Batterieelement bereitzustellen, in welchem bipolare Zellen mit einer hohen Packungsdichte angeordnet werden können.

Diese Aufgabe wird durch eine bipolare Zelle für eine wiederaufladbare Batterie mit den Merkmalen des Anspruchs 1 und durch ein Batterieelement mit den Merkmalen des Anspruchs 8 gelöst.

Vorteilhafte Ausführungsformen der bipolaren Zelle und des Batterieelementes sowie bevorzugte Weiterbildungen sind Gegenstand der Unteransprüche und werden in der folgenden Beschreibung, insbesondere im Zusammenhang mit den Figuren, beschrieben.

Die erfindungsgemäße bipolare Zelle für eine wiederaufladbare Batterie weist eine metallische Elektrode als Anode und eine Gaselektrode für ein aktives gasförmiges Material als Kathode auf. Zwischen der Anode und der Kathode ist ein elektrisch leitfähiges Teil angeordnet, wobei das leitfähige Teil um eine Gaszufuhr zu der Kathode zu ermöglichen, auf der zur Kathode hin orientierten Seite mindestens einen Gaskanal aufweist.

Als Kerngedanke der Erfindung kann angesehen werden, den Sauerstoff in einer bipolaren Anordnung nicht von außen, sondern von innen zuzuführen. Auf diese Weise ist eine vorteilhafte bipolare Anordnung auch für eine Zink-Luft-Batterie möglich.

Insbesondere werden dadurch die wesentlichen Vorteile, wie eine hohe Stromdichte durch eine dünne Gaselektrode, ein gleichmäßiger Verlauf des elektrischen Potenzials der Kathode und der Anode und die dadurch bewirkte erhöhte Lebensdauer der Gesamtzelle sowie eine mögliche hohe Packungsdichte der bipolaren Zelle erreicht. Darüber hinaus weist die erfindungsgemäße bipolare Zelle einen sehr geringen Innenwiderstand auf, wodurch die Leistungsdichte weiter erhöht wird. Dadurch, dass das leitfähige Teil nur auf der zur Kathode hin orientierten Seite einen Gaskanal aufweist, wird ein definierter Zutritt des Oxidationsmittels Sauerstoff zur Kathode ermöglicht. Der erfindungsgemäße Aufbau der bipolaren Zelle erlaubt darüber hinaus die Realisierung einer sehr geringen Gesamtdicke der Zelle, ohne eine wesentliche Beeinträchtigung der mechanischen Stabilität. Die mögliche dünne Ausführung der Kathode führt zu einem kleinen Diffusionsweg, den der Sauerstoff zurücklegen muss, wodurch ein hoher Stoffdurchsatz bewirkt wird und sich die resultierende Stromdichte erhöht.

Erfindungsgemäß weist die Anode Zink auf und/oder das gasförmige Material enthält Sauerstoff.

Zink ist ein verhältnismäßig elektropositives Metall, welches bereitwillig Elektronen abgibt und daher als effektives Reduktionsmittel dient. Ferner kann das Metall Zink in großen Mengen kostengünstig erhalten werden und ist mechanisch leicht bearbeitbar. Darüber hinaus lassen sich mit Zink eine Vielzahl von Legierungen herstellen, in denen die Aktivität des Zinks weiter erhöht werden kann. Neben Zink können jedoch auch andere unedle Metalle, insbesondere Übergangselemente, wie Eisen, Nickel, Kupfer oder Cadmium verwendet werden.

Sauerstoff ist besonders gut als Oxidationsmittel geeignet, da es eine hohe Elektronegativität aufweist und damit ein hohes Oxidationspotenzial. Ferner ist Sauerstoff aus der Atmosphäre, beispielsweise durch eine fraktionierte Luftverflüssigung, in großen Mengen erhältlich. Auch die in einer geringen Dosierung gesundheitsunschädlichen Eigenschaften des Sauerstoffes erlauben dessen einfache Handhabung. Schließlich weist das Elementpaar Zink/Sauerstoff eine hohe Differenz der elektrochemischen Potenziale auf, sodass ein hoher Wirkungsgrad der daraus gebildeten bipolaren Zelle erreicht wird.

Es ist vorteilhaft, wenn das elektrisch leitfähige Teil als Abstandshalter zwischen der Anode und der Kathode vorgesehen ist.

Auf diese Weise wird ein gleichmäßiger Abstand zwischen der Anode und Kathode gewährleistet und der Gesamtaufbau mechanisch stabilisiert. Durch den gleichen Abstand an jedem Punkt der sich gegenüberliegenden Elektrodenoberflächen werden eine einheitliche Potenzialdifferenz und Stromdichte über die gesamte Elektrodenfläche hergestellt. Dieser einheitliche Potenzialverlauf wirkt sich vorteilhaft auf die Lebensdauer der Gesamtzelle aus, da die elektrochemische Belastung gleich verteilt ist.

In einer besonders bevorzugten Ausführungsform der erfindungsgemäßen bipolaren Zelle bildet der Gaskanal zumindest eine Eintrittsöffnung und zumindest eine Austrittsöffnung, welche eine durchgehende Durchströmung des Gaskanals durch das gasförmige Material erlauben.

Auf diese Weise wird ein kontinuierlicher Zustrom von Sauerstoff aus der Atmosphäre an die Kathode ermöglicht. Der Eintritt des gasförmigen Materials in die Eintrittsöffnung kann durch eine erzwungene Konvektion, beispielsweise durch Ventilatoren oder Pumpvorrichtungen, unterstützt werden. Die Eintrittsöffnung ist bevorzugt auf einer anderen Seite als die Austrittsöffnung angeordnet, damit keine unerwünschte Wechselwirkung zwischen den verschiedenen Strömungsrichtungen des ein- und ausströmenden gasförmigen Materials auftritt.

Es ist zweckmäßig, wenn die Anode, die Kathode und das leitfähige Teil platten- oder scheibenförmig ausgebildet sind.

Auf diese Weise werden große Oberflächen für den Stoffaustausch sowie für den Ladungsträgertransport bereitgestellt, und die Leistungsdichte der bipolaren Zelle wird somit verbessert. Als mögliche Geometrien sind rechteckige, quadratische, ovale oder kreisrunde Geometrien denkbar. Elemente dieser Form lassen sich mit herkömmlichen Produktionsverfahren einfach und kostengünstig herstellen.

Erfindungsgemäß weist das leitfähige Teil im Gaskanal eine poröse Oberfläche auf.

Dadurch wird erreicht, dass im oberflächennahen Bereich des Gaskanals keine laminare Strömung des gasförmigen Materials auftritt, sondern Verwirbelungen und eine turbulente Strömung entstehen, welche für eine gute Durchmischung sorgen und die Gaszufuhr an der Kathodenoberfläche verbessern. Bei der porösen Oberfläche kann es sich um mikroskopische Unebenheiten im Mikrometerbereich handeln, welche entweder maschinell erzeugt werden oder eine Materialeigenschaft darstellen.

Bevorzugt weist das leitfähige Teil Stahl, Graphit, Messing oder Nickel auf.

Diese Werkstoffe weisen eine relativ hohe Leitfähigkeit auf, sind mechanisch ausreichend stabil, einfach in verschiedenen Formen und Geometrien herstellbar, weisen eine gute Verarbeitbarkeit auf und sind verhältnismäßig kostengünstig in der Beschaffung. Sollten höhere Anforderungen an die Leitfähigkeit gestellt werden, können auch hochwertigere Materialien, wie beispielsweise Gold, Silber oder Kupfer verwendet werden. Neben Graphit können auch entsprechende Kohlenstoffmodifikationen, insbesondere Intercalationsverbindungen, eingesetzt werden.

Erfindungsgemäß weist das leitfähige Teil eine Mehrzahl von Gaskanälen auf.

Durch eine Mehrzahl von Gaskanälen kann in der gleichen Zeiteinheit ein höherer Durchsatz an gasförmigem Material erfolgen und somit die Stoffstromdichte an der Kathode und insgesamt die Leistungsdichte der bipolaren Zelle erhöht werden. Ferner ist bei einer möglichen Blockierung von einem Gaskanal eine weiter fortgesetzte Durchströmung des leitfähigen Teiles möglich. Dies senkt die Ausfallwahrscheinlichkeit und erhöht die Lebensdauer der bipolaren Zelle. Die Gaskanäle können durch verschiedene oberflächenbearbeitende Verfahren, beispielsweise durch Fräs-, Präge-, Schneid- oder Ätzverfahren erstellt werden.

Es ist erfindungsgemäß, wenn die Gaskanäle miteinander verbunden sind.

Auf diese Weise kann im Fall einer möglichen Verstopfung durch Verunreinigungen in einem bestimmten Bereich des Gaskanals die weitere Durchströmung des leitfähigen Teils aufrechterhalten werden, so dass die Zuverlässigkeit der bipolaren Zelle, insbesondere im Betrieb an Orten mit einer höheren Partikelbelastung, erhöht wird. Ferner wird durch die dadurch bedingte Mehrzahl an Verzweigungspunkten die Verwirbelung des durchströmenden gasförmigen Materials verbessert und der Stoffdurchsatz an die Kathodenoberfläche angehoben. Zudem wird insgesamt die Fläche, welche zwischen der Kathodenoberfläche und dem leitfähigen Teil zum Stoffaustausch zur Verfügung steht vergrößert, was sich positiv auf die Leistung der bipolaren Zelle auswirkt.

Es ist erfindungsgemäß, wenn die Gaskanäle einen gekrümmten oder spiralförmigen Verlauf aufweisen.

Dies verlängert die Transportstrecke und vergrößert die Oberfläche, über welche das gasförmige Material mit der Kathode in Kontakt treten kann. Zudem wird durch den gekrümmten oder spiralförmigen Verlauf das Auftreten von Verwirbelungen und Konvektionen in der Strömung des gasförmigen Materials unterstützt. Zusätzlich können die Gaskanäle sich ändernde Durchmesser aufweisen, so dass dem auftretenden Druckverlust durch eine Erweiterung des Kanaldurchmessers begegnet werden kann.

Besonders bevorzugt bilden die Gaskanäle zumindest 50 % der zur Kathode orientierten Oberfläche des leitfähigen Teiles.

Je größer die Oberfläche, welche zum Gaszutritt auf dem leitfähigen Teil zur Kathodenoberfläche zur Verfügung steht, desto höher ist die mögliche Leistung der bipolaren Zelle, da in einer Zeiteinheit mehr Gasmoleküle an der Kathodenoberfläche adsorbieren können und zur Elektronenaufnahme zur Verfügung stehen. Die restliche Kontaktoberfläche zwischen der Kathode und dem leitfähigen Teil dient der elektronischen Ladungsübertragung. Die Oberfläche der Gaskanäle der zur Kathode orientierten Oberfläche des leitfähigen Teiles konkurriert mit der zur elektronischen Ladungsträgerübertragung bereitstehenden Oberfläche, welche bei einem zu geringen Wert den Innenwiderstand der bipolaren Zelle erhöht.

Bevorzugt ist die Anode aus einer Matrix mit Hohlräumen und einer darin enthaltenen Metall- oder Metalloxidpaste gebildet.

Somit kann die Anode aus einer dreidimensionalen Struktur, beispielsweise aus einem Kunststoffschaum mit einer metallisierten Oberfläche, aufgebaut sein. Als Oberflächenmetall ist Nickel oder verbleites Kupfer bevorzugt. Diese dreidimensionale Struktur ist mit einer Metall- oder Metalloxidpaste gefüllt, welche den eigentlichen Anodenprozess durchläuft. Dabei reagiert die Matrix selbst nicht, sondern dient lediglich zur Stromableitung. Als Materialien für die metallische Matrix eignen sich insbesondere Nickel oder ähnliche Metalle und deren Oxide, insbesondere Nickeloxid. Weitere geeignete Metalle sind beispielsweise Kupfer, Zink, Blei oder Stahl beziehungsweise Eisen.

Es ist vorteilhaft, wenn die Kathode eine Dicke von etwa 0,05 mm bis etwa 0,5 mm aufweist.

Da die Länge der Diffusionsstrecke nach dem 1. Fick'schen Gesetz linear in den Gasfluss und damit in die erreichbare Stromdichte eingeht, können auf diese Weise Stromdichten erreicht werden, die um ein Vielfaches über denen von klassischen Luftkathoden liegen. Die Gasdiffusion durch eine derart dünne Elektrode erfolgt relativ rasch und damit ist die resultierende elektrische Stromdichte hoch. Durch die mechanische Stabilisierung des angrenzenden leitfähigen Teiles können derartige dünne Strukturen auch ohne einen wesentlichen Stabilitätsverlust erzeugt werden. Gegenstand der Erfindung ist ferner ein Batterieelement mit mehreren erfindungsgemäßen bipolaren Zellen.

In einer besonders bevorzugten Ausführungsform des erfindungsgemäßen Batterieelementes sind die bipolaren Zellen in stapelförmiger Anordnung in Reihe geschaltet.

Als Kerngedanke des erfindungsgemäßen Batterieelementes kann angesehen werden, den sehr platzsparenden Aufbau einer erfindungsgemäßen bipolaren Zelle zu nutzen und damit in einer stapelförmigen Anordnung ein Batterieelement mit einer sehr hohen Leistungsdichte bereitzustellen. Die erfindungsgemäßen bipolaren Zellen können in einfacher Reihenfolge hintereinander angeordnet werden, ohne eine bestimmte Stapelreihenfolge von Anode/Kathode/Luft/Kathode/Anode einzuhalten. Es lassen sich somit sehr hohe Packungsdichten erreichen, und die Verkabelung zwischen den einzelnen bipolaren Zellen kann entfallen. Es werden daher um ein Vielfaches höhere Leistungsdichten als bei herkömmlichen Batterieelementen erzielt.

Weitere Eigenschaften und Vorteile der erfindungsgemäßen bipolaren Zelle und des erfindungsgemäßen Batterieelementes werden nachstehend unter Bezugnahme auf die beigefügten schematischen Figuren beschrieben. Darin zeigt:
- Fig. 1: eine Querschnittsansicht einer erfindungsgemäßen bipolaren Zelle;
- Fig. 2a: eine Querschnittsansicht sowie eine Aufsicht auf ein leitfähiges Teil mit vier parallelen Gaskanälen;
- Fig. 2b: eine Querschnittsansicht sowie eine Aufsicht auf ein leitfähiges Teil mit einem spiralartig geformten Gaskanal;
- Fig. 2c: eine Querschnittsansicht und eine Aufsicht auf ein leitfähiges Teil mit mehreren büschelartig angeordneten Gaskanälen und
- Fig. 3: eine Querschnittsansicht eines erfindungsgemäßen Batterieelementes mit mehreren erfindungsgemäßen bipolaren Zellen in stapelförmiger Anordnung.

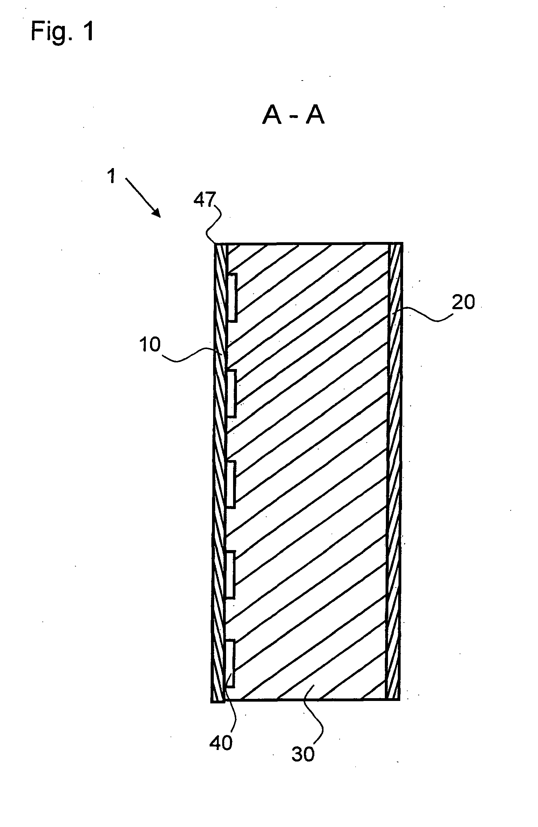

Ein Beispiel einer erfindungsgemäßen bipolaren Zelle 1 ist in Fig. 1 im Querschnitt dargestellt.

Zwischen der Luftkathode 10 und der Zinkanode 20 befindet sich das leitfähige Teil 30, welches auf der zur Luftkathode 10 hin orientierten Seite mit fünf Gaskanälen 40 versehen ist, welche an die Luftkathode 10 angrenzen und mit dieser in einem Gasaustausch stehen. Luft oder Sauerstoff tritt über die Gaskanäle 40 in das leitfähige Teil 30 ein, und die Sauerstoffmoleküle nehmen an der Luftkathode 10 Elektronen auf und werden zu Hydroxidionen reduziert, welche im Elektrolyten 47 der Luftkathode 10 in Lösung gehen. Die von den Sauerstoffmolekülen aufgenommenen Elektronen stammen von den Zinkatomen der Zinkanode 20, wobei das Zink zu Zink(2+)-Ionen oxidiert wird, welche ebenfalls von einem Elektrolyten 47 aufgenommen werden. Es erfolgt somit ein Elektronenübergang von der Zinkanode 20 zur Luftkathode 10 und eine damit bereitgestellte elektrische Leistung. Über die Gaskanäle 40 kann Sauerstoff auf eine einfache Weise zwischen den beiden Elektroden, der Luftkathode 10 und der Zinkanode 20, in die bipolare Zelle 1 eindringen und an der Luftkathode 10 die gewünschte elektrochemische Reaktion bewirken.

Als Elektrolyte können Flüssigelektrolyte oder Festkörperelektrolyte, wie beispielsweise Polymerelektrolyt-Membranen, Natriumaluminate und dergleichen verwendet werden.

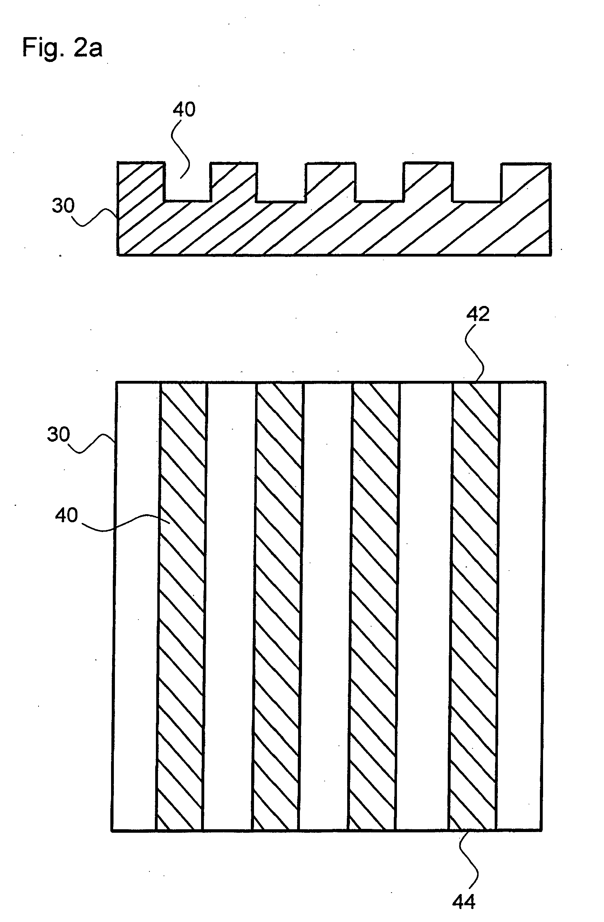

Eine Aufsicht und eine Querschnittsansicht durch eine Ausführungsform eines leitfähigen Teils 30 ist in Fig. 2a dargestellt.

Das leitfähige Teil 30 weist vier parallel angeordnete geradlinige Gaskanäle 40 auf. Diese Gaskanäle 40 durchlaufen das leitfähige Teil 30 vollständig, so dass Sauerstoff durch eine Eintrittsöffnung 42 in den Gaskanal 40 eintreten und durch eine Austrittsöffnung 44 aus diesem wieder austreten kann. Beim Passieren des Gaskanales 40 haben die Sauerstoffmoleküle die Möglichkeit, an die Luftkathode 10 (nicht dargestellt) zu adsorbieren und Elektronen aufzunehmen.

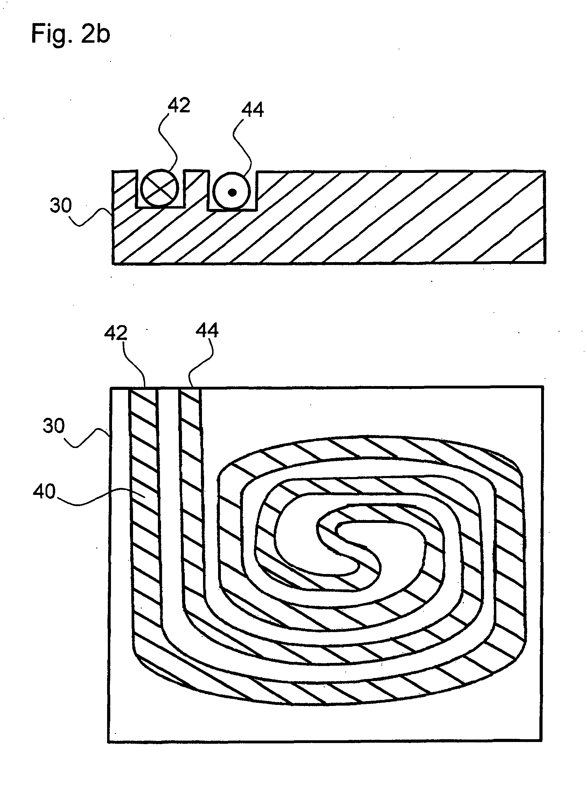

Ein weiteres Beispiel für eine mögliche Struktur 30 ist in einer Aufsicht und in einer Querschnittsansicht in Fig. 2b dargestellt.

Der innerhalb des leitfähigen Teiles 30 verlaufende Gaskanal 40 weist eine spiralförmig angeordnete Struktur auf, wobei sich die Eintrittsöffnung 42 und die Austrittsöffnung 44 auf der gleichen Seite des leitfähigen Teils 30 befinden. Durch die spiralförmige Geometrie des Gaskanales 40 ist ein sehr langer Kanalweg gegeben, so dass die eintretenden Sauerstoffmoleküle vergleichsweise lange in dem Gaskanal 40 verbleiben und an die Luftkathode 10 (nicht gezeigt) adsorbieren können und dort reduziert werden. Nicht verbrauchte Sauerstoffmoleküle treten am Ende des Gaskanals 40 wieder aus der Austrittsöffnung 44 aus und stehen für einen Wiedereintritt in die Eintrittsöffnung 42 erneut zur Verfügung. Durch die innerhalb des Gaskanals 40 auftretenden starken Krümmungen innerhalb des spiralartigen Verlaufes ist eine gute Durchmischung und Verwirbelung der gasförmigen Volumenelemente gegeben, wodurch der Stoffaustausch verbessert und die Leistung der bipolaren Zelle 1 erhöht wird.

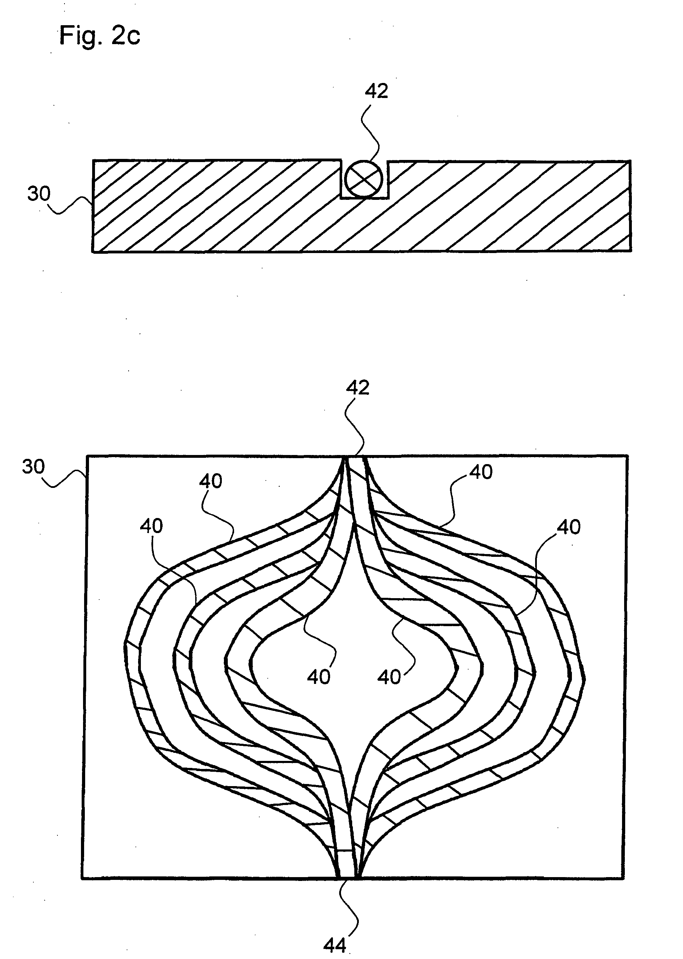

Ein weiteres Beispiel einer möglichen Struktur für ein leitfähiges Teil 30 ist in einer Querschnitts- und in einer Aufsicht in Fig. 2c dargestellt.

Hierbei sind mehrere Gaskanäle 40 vorgesehen, welche eine gemeinsame Eintrittsöffnung 42 und eine auf der gegenüberliegenden Seite angeordnete gemeinsame Austrittsöffnung 44 aufweisen. Der Gaskanal 40 spaltet sich beim Hindurchtreten durch das leitfähige Teil 30 büschelartig in die einzelnen Gaskanäle 40 auf, welche vor der gemeinsamen Austrittsöffnung 44 wieder zusammengeführt werden. Auf diese Weise wird eine Erhöhung der Kontaktoberfläche zwischen den Gaskanälen 40 und der Luftkathode 10 (nicht gezeigt) erreicht und der Sauerstoffdurchsatz erhöht sowie die Leistung der bipolaren Zelle 1 verbessert. Zur weiteren Optimierung des Stoffdurchsatzes trägt auch der gekrümmte Verlauf der einzelnen Gaskanäle 40 bei, welche zu einer guten Durchmischung der in den Gaskanälen 40 strömenden Volumenelemente führt. Zwischen den einzelnen Gaskanälen 40 können Verbindungskanäle (nicht gezeigt) vorgesehen sein, um die Kontaktoberfläche weiter zu erhöhen und die Durchmischung zusätzlich zu verbessern.

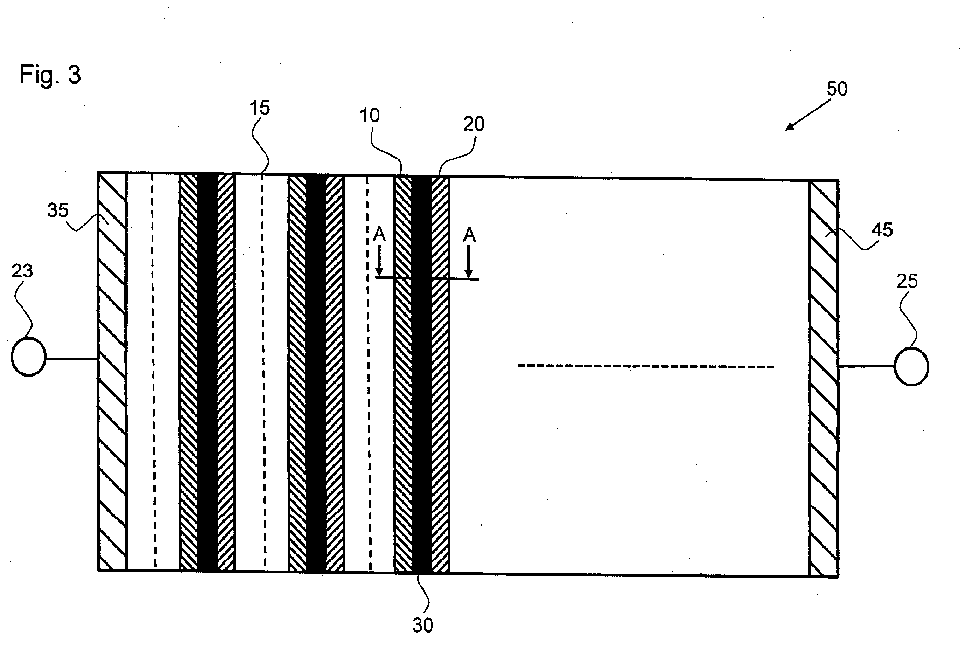

Fig. 3 zeigt ein Beispiel für einen Aufbau eines erfindungsgemäßen Batterieelementes 50 in einer Querschnittsansicht.

Das Batterieelement 50 wird durch eine Mehrzahl von bipolaren Zellen 1 in einer stapelförmigen Anordnung gebildet, welche eine Kathode 10, eine Anode 20 sowie dazwischen liegendes leitfähiges Teil 30 aufweisen. Die einzelnen bipolaren Zellen 1 sind voneinander durch einen Separator 15, beispielsweise einem Dielektrikum, voneinander getrennt. An den jeweiligen Enden des stapelförmigen Aufbaus sind jeweils Endplatten 35, 45 vorgesehen, mit einem kathodenseitigen Stromanschluss 23 und einem anodenseitigen Stromanschluss 25. An diesen beiden Stromanschlüssen 23, 25 kann die durch die in Reihe geschaltete stapelförmige Anordnung der bipolaren Zellen 1 bereitgestellte elektrische Spannung abgegriffen werden. Durch den sehr flachen Aufbau einer einzelnen bipolaren Zelle 1 und der Möglichkeit, den Gaszutritt zwischen der Kathode 10 und der Anode 20 zu ermöglichen, ergibt sich ein sehr platzsparender Aufbau mit einer hohen Dichte an bipolaren Zellen 1 und eine damit erzeugte hohe Leistung des erfindungsgemäßen Batterieelementes 50.

Die erfindungsgemäße bipolare Zelle zeichnet sich durch eine hohe Kontaktfläche zwischen dem leitfähigen Teil und den beiden Elektroden aus, wodurch ein geringer Innenwiderstand bewirkt wird. Zudem kann der Gaszutritt von Luft oder Sauerstoff zwischen der Kathode und der Anode erfolgen, wodurch sich eine erhebliche Platzersparnis ergibt und eine flache Geometrie der bipolaren Zelle möglich wird. Neben dem Gaszutritt zwischen den beiden Elektroden ermöglicht das dazwischen liegende leitfähige Teil ferner eine mechanische Stabilisierung. Dadurch können Luftkathoden mit einer geringen Dicke von unter 0,5 mm realisiert werden, ohne dass die Stabilität beeinträchtigt wird. Auf diese Weise werden wegen der kurzen Diffusionsstrecke große Stromdichten erreicht. Durch den geringen Innenwiderstand der erfindungsgemäßen bipolaren Zelle liegen die beiden Elektrodenoberflächen auf dem gleichen Potenzial, wodurch eine elektrochemische Gleichmäßigkeit und eine Erhöhung der Lebensdauer der Zelle bewirkt wird.

Das erfindungsgemäße Batterieelement weist den erheblichen Vorteil auf, dass kein Luftspalt zwischen den einzelnen bipolaren Zellen in einer stapelförmigen Anordnung erforderlich ist, da der Gaszutritt unmittelbar von innen über das leitfähige Teil zwischen den Elektroden zugeführt wird. Auch die übliche Stapelreihenfolge von Anode/Kathode/Luft/Kathode/Anode ist nicht mehr zwingend erforderlich, so dass die bipolaren Elektroden in einer einfachen Reihenfolge direkt hintereinander angeordnet werden können. Somit lassen sich deutlich höhere Packungsdichten erreichen und eine Verkabelung zwischen den einzelnen bipolaren Zellen kann entfallen. Es werden damit sehr hohe Leistungsdichten erzielt.

## Patentansprüche

1. Bipolare Zelle (1) für eine wiederaufladbare Batterie mit
einer metallischen Elektrode als Anode (20) und
einer Gaselektrode für ein aktives gasförmiges Material als Kathode (10), wobei zwischen der Anode (20) und der Kathode (10) ein elektrisch leitfähiges Element (30) angeordnet ist, welches, um eine Gaszufuhr zu der Kathode (10) zu ermöglichen, auf der zur Kathode (10) hin orientierten Seite mindestens einen Gaskanal (40) aufweist, wobei die Anode (20) Zink aufweist und das gasförmige Material Sauerstoff enthält,
**dadurch gekennzeichnet,**
**dass** das leitfähige Teil (30) eine Mehrzahl von Gaskanälen (40) aufweist, welche miteinander verbunden sind und einen gekrümmten oder spiralförmigen Verlauf aufweisen, und
**dass** das leitfähige Teil (30) in den Gaskanälen (40) eine poröse Oberfläche aufweist.

2. Bipolare Zelle (1) nach Anspruch 1,
**dadurch gekennzeichnet,**
**dass** das elektrisch leitfähige Teil (30) als Abstandshalter ausgebildet ist.

3. Bipolare Zelle (1) nach Anspruch 1 oder 2,
**dadurch gekennzeichnet,**
**dass** die Gaskanäle (40) zumindest eine Eintrittsöffnung (42) und zumindest eine Austrittsöffnung (44) bilden, welche eine durchgehende Durchströmung der Gaskanäle (40) durch das gasförmige Material erlauben.

4. Bipolare Zelle (1) nach einem der Ansprüche 1 bis 3,
**dadurch gekennzeichnet,**
**dass** die Anode (20), die Kathode (10) und das leitfähige Teil (30) platten- oder scheibenförmig ausgebildet sind.

5. Bipolare Zelle (1) nach einem der Ansprüche 1 bis 4,
**dadurch gekennzeichnet,**
**dass** das leitfähige Teil (30) Stahl, Graphit, Messing oder Nickel aufweist.

6. Bipolare Zelle (1) nach einem der Ansprüche 1 bis 5,
**dadurch gekennzeichnet,**
**dass** die Anode (20) aus einer Matrix mit Hohlräumen und einer darin enthaltenen Metall- oder Metalloxidpaste gebildet ist.

7. Bipolare Zelle (1) nach einem der Ansprüche 1 bis 6,
**dadurch gekennzeichnet,**
**dass** die Kathode (10) eine Dicke von 0,05 mm bis 0,5 mm aufweist.

8. Batterieelement (50) mit mehreren bipolaren Zellen (1) nach einem der Ansprüche 1 bis 7.

9. Batterieelement (50) nach Anspruch 8,
**dadurch gekennzeichnet,**
**dass** die bipolaren Zellen (1) in stapelförmiger Anordnung in Reihe geschaltet sind.

## Claims

1. Bipolar cell (1) for a rechargeable battery, having
- a metal electrode as an anode (20) and
- a gas electrode for an active gaseous material as a cathode (10), wherein an electrically conductive element (30) is arranged between the anode (20) and the cathode (10), said electrically conductive element (30) having, for the purpose of allowing a gas supply to the cathode (10), on the side facing towards the cathode (10) at least one gas channel (40), wherein the anode (20) is made of zinc and the gaseous material contains oxygen,
**characterised in that**
the conductive part (30) has a plurality of gas channels (40) connected to each other and having a curved or spiral progression, and
the conductive part (30) has a porous surface in the gas channels (40).

2. Bipolar cell (1) according to claim 1,
**characterised in that**
the electrically conductive part (30) is formed as a spacer.

3. Bipolar cell (1) according to claim 1 or 2,
**characterised in that**
the gas channels (40) form at least one inlet opening (42) and at least one outlet opening (44) which allow the gaseous material to continuously flow through the gas channels (40).

4. Bipolar cell (1) according to one of the claims 1 to 3,
**characterised in that**
the anode (20), the cathode (10) and the conductive part (30) are formed as a plate or a disc.

5. Bipolar cell (1) according to one of the claims 1 to 4,
**characterised in that**
the conductive part (30) is made of steel, graphite, brass or nickel.

6. Bipolar cell (1) according to one of the claims 1 to 5,
**characterised in that**
the anode (20) is formed from a matrix with cavities and a metal or metal oxide paste contained therein.

7. Bipolar cell (1) according to one of the claims 1 to 6,
**characterised in that**
the cathode (10) has a thickness of from 0.05 mm to 0.5 mm.

8. Battery element (50) with a plurality of bipolar cells (1) according to one of the claims 1 to 7.

9. Battery element (50) according to claim 8,
**characterised in that**
the bipolar cells (1) are arranged in series in a stacked arrangement.

## Revendications

1. Cellule bipolaire (1) pour une batterie rechargeable avec :
une électrode métallique, en tant qu'anode (20), et
une électrode à gaz pour un matériau actif gazeux, en tant que cathode (10),
un élément conducteur de l'électricité (30) étant disposé entre l'anode (20) et
la cathode (10), qui, pour permettre une amenée de gaz vers la cathode (10), comprend, du côté orienté vers la cathode (10), au moins un canal à gaz (40),
l'anode (20) comprenant du zinc et le matériau gazeux contenant de l'oxygène,
**caractérisée :**
**en ce que** la partie conductrice (30) comprend une pluralité de canaux à gaz (40), qui sont reliés les uns aux autres et qui comportent un parcours recourbé ou en forme de spirale, et
**en ce que** la partie conductrice (30) comprend, dans les canaux à gaz (40),
une surface poreuse.

2. Cellule bipolaire (1) selon la revendication 1,
**caractérisée :**
**en ce que** la partie conductrice de l'électricité (30) est constituée en tant qu'espaceur.

3. Cellule bipolaire (1) selon la revendication 1 ou 2,
**caractérisée :**
**en ce que** les canaux à gaz (40) forment au moins un orifice d'entrée (42) et
au moins un orifice de sortie (44), qui permettent une traversée directe des canaux à gaz par l'intermédiaire du matériau gazeux.

4. Cellule bipolaire (1) selon une des revendications 1 à 3,
**caractérisée :**
**en ce que** l'anode (20), la cathode (10) et la partie conductrice (30) sont constituées en forme de plaque ou en forme de disque.

5. Cellule bipolaire (1) selon une des revendications 1 à 4,
**caractérisée :**
**en ce que** la partie conductrice (30) comprend de l'acier, du graphite, du laiton ou du nickel.

6. Cellule bipolaire (1) selon une des revendications 1 à 5,
**caractérisée :**
**en ce que** l'anode (20) est formée d'une matrice avec des cavités et d'une pâte de métal ou d'oxyde métallique contenue à l'intérieur de celles-ci.

7. Cellule bipolaire (1) selon une des revendications 1 à 6,
**caractérisée :**
**en ce que** la cathode (10) présente une épaisseur de 0,05 mm à 0,5 mm.

8. Elément de batterie (50) avec plusieurs cellules bipolaires (1) selon une des revendications 1 à 7.

9. Elément de batterie (50) selon la revendication 8,
**caractérisé :**
**en ce que** les cellules bipolaires (1) sont reliées en série, selon une disposition en empilement.
